# EUROPEAN PATENT SPECIFICATION

(11) **EP 0 889 187 B1**
(45) Date of publication and mention of the grant of the patent: **12.03.2003**
(21) Application number: 98110509.1
(22) Date of filing: 09.06.1998
(51) Int. Cl.: E05C 17/34, B62D 33/03

(54) **A device for automatic arrestment of tilting elements in two positions**
Vorrichtung für das selbsttätige Halten eines kippbaren Elements in zwei Positionen
Dispositif automatique pour maintenir un élément oscillant dans deux positions

(30) Priority: 11.06.1997 CZ 178597
(43) Date of publication of application: 07.01.1999
(73) Proprietor: Skoda Auto a.s., Milada Boleslav (CZ)
(72) Inventor: Kolert, Zdenek, 549 01 Nove Mesto nad Metuji (CZ)
(74) Representative: Beetz & Partner Patentanwälte

(56) References cited:
- DE-A- 2 812 894
- DE-C- 70 326
- FR-A- 2 145 004
- US-A- 1 925 831

## Description

### Field of the Invention

The present invention relates to a device for automatic arrestment of tilting rear walls of commercial vehicles, windows, doors or arms, in two positions.

### Background of the Invention

Up to now the tilting rear walls of commercial vehicles have used one-position securing rods that secured the walls in the fully opened position. A disadvantage of this solution is that the walls can be destructed if a pulling device is used that protrudes into the area of its maximum tilting.

To fix windows in two positions a rod provided with notches sliding in a guiding sleeve provided with an arresting projection is used see for example DE 2 812 894 A. By action of its weight the rod notch engages with the projection and so it arrests the window in the first position. After the rod is lifted, it is possible to shut the window or to open it to the maximum position that is given by the position of a transversal pin at the end of the rod whereby it is prevented that it is shifted out of the sleeve. A disadvantage of this method of arresting is an excessive wear of the arresting projection in the sleeve. Thereby, the arrestment becomes unreliable and the tilting elements, so as windows, tilting rear walls of commercial vehicles, etc., can be easily destroyed.

### Summary of the Invention

The above mentioned drawbacks are substantially removed by a device for automatic arrestment of tilting elements in two positions which is comprised of an upper and a lower arms, a lever, a latch and a rod the upper arm of which is rotatably mounted' in the basic body by one end. The other end of this basic body is rotatably connected by a pin with a lever and a latch. The other end of the lever is rotatably connected by a pin with the other end of the latch and by a rod which is by the other end rotatably connected through a pin with the lower arm whose other end is rotatably affixed to the tilting element whereby an open notch is made in the side of the latch.

### Industrial Use

The device for automatic arrestment is preferably used in tilting of the rear body cover of a pick-up automobile. There, in some cases it is necessary to disassemble or tilt down the ball stud of the pulling device before its complete tilting to prevent destruction of the rear cover.

This device can also..be preferably used to open slightly the tilting doors of refrigeration boxes where full opening is not necessary in most cases, only a partial opening is enough for a common insertion of extraction of individual stored pieces of goods whereby unwanted ventilation and warming of the whole space is prevented. This arresting device can be used to open the tilting doors entirely in case of need and to extract or insert a whole drawer of frozen goods.

### Brief Description of the Drawings

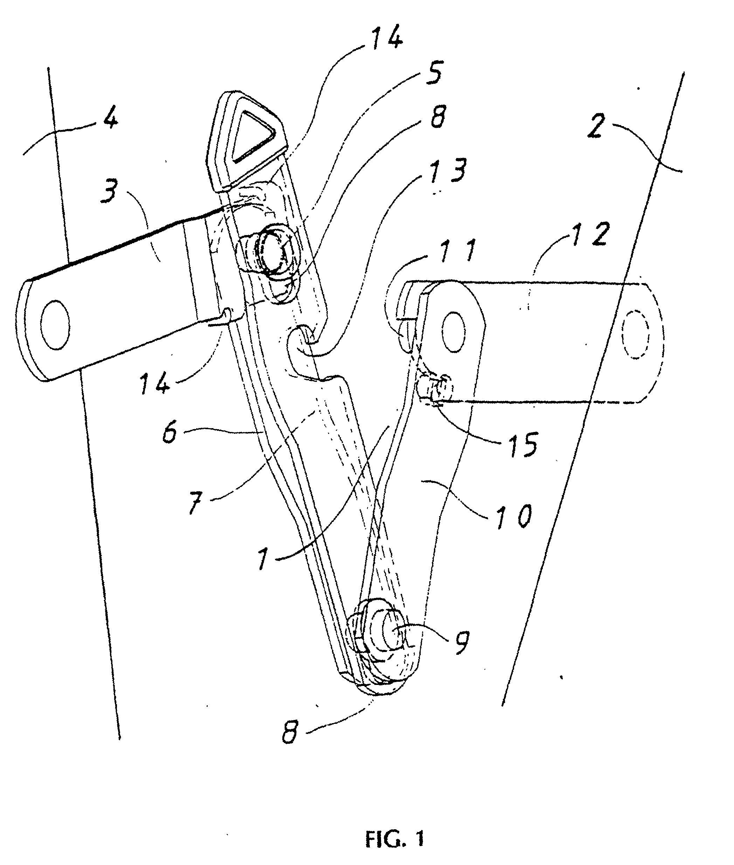

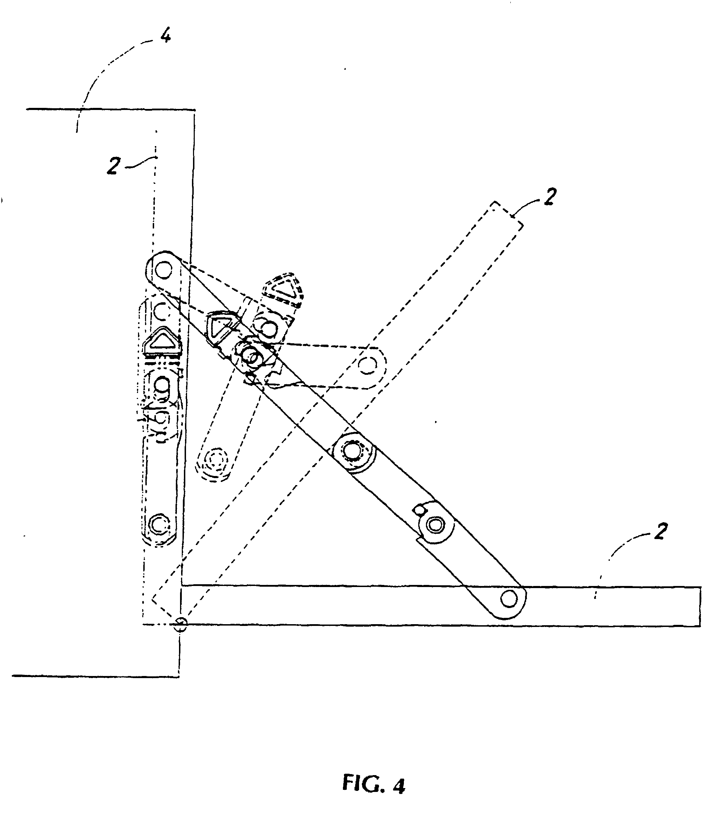

The present invention will be further explained with reference to the accompanied drawings where Figure 1 shows an axonometric view of the device for automatic arresting between the partially opened and fully opened positions. Figure 2 shows a device schematically that keeps the tilting element in a partially opened position, Figure 3 shows a device securing the tilting element in an opened position and Figure 4 shows this device schematically in the closed, partially opened and opened positions.

### Detailed Description of the Invention

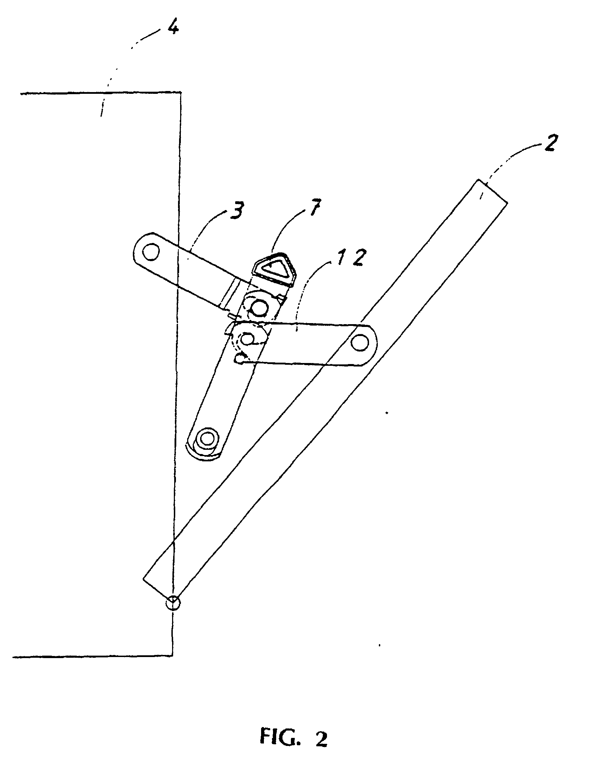

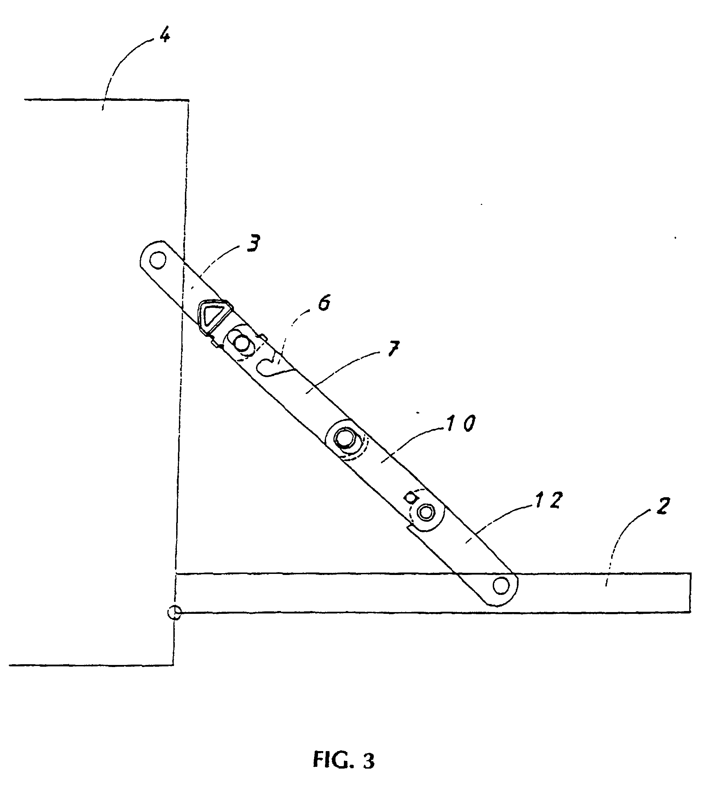

The device 1 for automatic arrestment of the tilting element 2 in two positions is comprised of the upper arm 3 which is rotatably mounted by one end in the basic body 4 and by the other end it is rotatably connected with the upper pin 5, the lever 6 and the latch 7 provided with the oval opening 8. The other end of the lever 6 is connected with the other end of the latch 7 through the central pin 9, also provided with an oval opening 8 and by another rod 10 that is by the other end rotatably connected through an extended pin 11 with the lower arm 12 whose other end is rotatably affixed to the tilting element 2. Further, the latch 7 is provided with a side notch 13 into which the extended pin 11 engages automatically during closing of the tilting element 2. During opening of the tilting element 2 the upper arm 3 and the lower arm 12 come to traction at first. After they are straightened up the tilting element 2 is stopped in a partially opened position (see Fig. 2). If it is required to open the tilting element 2 to an entirely opened position it is necessary to lift the latch 7 manually. Thereby, the extended pin 11 slips out from the side notch 13 and thereby the upper arm 3 with lever 6 as well as the rod 10 with the lower arm 12 are straightened up. Thereby, the tilting element 2 is arrested in the fully opened position (see Fig. 3). The arm 3 and the lever 6 turn on the upper pin 5 only within a precisely defined angle limited by the evasion 14 of the upper arm 3 border. A similar limitation of turning is also made between the bottom arm 12 and the rod 10 by means of a stop pin 15 situated on the rod 10.

## Claims

1. A device for automatic arrestment of tilting elements in two positions which is comprised of an upper and a lower arms, a lever, a latch and a rod, **characterised in that** the upper arm (3) is rotatably mounted by one end in the basic body (4) whose other end is rotatably interconnected by an upper pin (5) with a lever (6) and a latch (7), whereby the other end of the lever (6) is rotatably connected by a central pin (9) with the other end of the latch (7) and the rod (10) which is by the other end rotatably connected through an extended pin (11) with the lower arm (12) whose other end is rotatably afixed to the tilting element (2) whereby an open notch (13) is made in the side of the latch (7).

2. Device according to claim 1, **characterised in that** the upper arm (3) and the lever (6) turn on the upper pin (5) only within a precisely defined angle limited by stopper means (14) of the upper arm (3) border.

3. Device according to claim 1 or 2, **characterised in that** the turning between the lower arm (12) and the rod (10) is limited by means of a stop pin (15) situated on the rod (10).

## Patentansprüche

1. Vorrichtung zum automatischen Arretieren von Schwenkelementen in zwei Stellungen, mit einem oberen und einem unteren Arm, einem Hebel, einem Riegel und einer Stange,
**dadurch gekennzeichnet, daß**
der obere Arm (3 mit einem Ende an einem Grundkörper (4) schwenkbar montiert und mit seinem anderen Ende durch einen oberen Stift (5) mit einem Hebel (6) und einem Riegel (7) schwenkbar verbunden ist, wobei das andere Ende des Hebels (6) über einen zentralen Stift (9) verschwenkbar mit dem anderen Ende des Riegels (7) und der Stange (10) verbunden ist, die mit dem anderen Ende über einen vorstehenden Stift (11) verschwenkbar mit dem unteren Arm (12) verbunden ist, dessen anderes Ende drehbar an dem Schwenkelement (2) befestigt ist, wobei in der Seite des Riegels (7) eine Kerbe (13) ausgebildet ist.

2. Vorrichtung nach Anspruch 1,
**dadurch gekennzeichnet, daß**
der obere Arm (3) und der Hebel (6) nur in einem genau vorgegebenen Winkel verschwenkbar sind, der von einem Anschlag (14) des oberen Armrandes (3) begrenzt wird.

3. Vorrichtung nach Anspruch 1 oder 2,
**dadurch gekennzeichnet, daß**
die Schwenkbewegung zwischen dem unteren Arm (12) und der Stange (10) durch einen an der Stange (10) angeordneten Anschlagstift (15) begrenzt ist.

## Revendications

1. Dispositif automatique pour maintenir des éléments oscillants en deux positions comprenant un bras supérieur et un bras inférieur, un levier, un verrou et une barre, **caractérisé en ce que** le bras supérieur (3) est monté de manière rotative à une extrémité dans le corps de base (4) dont l'autre extrémité est reliée de manière rotative par une broche supérieure (5) à un levier (6) et un verrou (7), l'autre extrémité du levier (6) étant reliée de manière rotative par une broche centrale (9) à l'autre extrémité du verrou (7) et par la barre (10) qui est reliée à l'autre extrémité de manière rotative par le biais d'une broche allongée (11) au bras inférieur dont l'autre extrémité est fixée de manière rotative à l'élément oscillant (2), une encoche ouverte (13) étant effectuée du côté du verrou (7).

2. Dispositif selon la revendication 1, **caractérisé en ce que** le bras supérieur (3) et le levier (6) tournent sur la broche supérieure (5) seulement en un angle défini avec précision limité par des moyens de butée (14) du bord du bras supérieur (3).

3. Dispositif selon la revendication 1 ou 2, **caractérisé en ce que** la rotation entre le bras inférieur (12) et la barre (10) est limitée au moyen d'une broche de butée (15) située sur la barre (10).
